# FASCICULE DE BREVET EUROPEEN

(11) **EP 2 123 962 B1**
(45) Date de publication et mention de la délivrance du brevet: **09.06.2010**
(21) Numéro de dépôt: 09158728.7
(22) Date de dépôt: 24.04.2009
(51) Int. Cl.: F16L 55/128, F16L 55/46

(54) **Outillage d'introduction dans un fourreau d'un dispositif de contrôle d'écoulement pour une canalisation de fluide, et procédé de mise en oeuvre**
Einführwerkzeug in eine Hülse einer Durchflusssteuervorrichtung für Flüssigkeitskanalisation und Umsetzungsverfahren
Tool for introducing into a sleeve a flow-control device for a fluid conduit, and implementation method

(30) Priorité: 20.05.2008 FR 0853279
(43) Date de publication de la demande: 25.11.2009
(73) Titulaire: GDF SUEZ, 75008 Paris (FR)
(72) Inventeur: Leme, David, 75016 Paris (FR); Dalibey, Amine, 94800 Villejuif (FR); Mangon, Didier, 80620 Lanches Saint Hilaire (FR)
(74) Mandataire: Bentz, Jean-Paul

(56) Documents cités:
- GB-A- 2 196 715
- GB-A- 2 244 780

## Description

L'invention concerne, de façon générale, les techniques liées à la gestion et à l'exploitation de réseaux de distribution de fluide, et en particulier de gaz.

Plus précisément, l'invention concerne, selon un premier aspect, un outillage d'introduction d'un dispositif de contrôle d'écoulement dans un fourreau, en vue de l'insertion ultérieure de ce dispositif chemisé par le fourreau dans une canalisation de fluide, ce dispositif de contrôle d'écoulement comprenant un corps creux doté d'une extrémité amont et d'une extrémité aval, une vanne intégrée au corps creux et conçue pour se fermer en réponse à un débit excessif de fluide dans la canalisation, un joint d'étanchéité à coupelle disposé à l'extrémité aval du corps creux, et une pluralité de pattes élastiques liées au corps creux entre les extrémités amont et aval de ce corps creux et conçues pour s'épanouir élastiquement par leurs extrémités libres tournées vers l'extrémité aval du corps creux, une fois le dispositif installé dans la canalisation, le joint et les pattes étant repliés radialement et contraints élastiquement dans le fourreau après introduction de ce dispositif dans ce fourreau.

Un dispositif de contrôle d'écoulement du type concerné est illustré à la figure 1 et décrit dans la demande de brevet FR 2007/03767.

Pour pouvoir être mis en place dans une canalisation, les dispositifs de ce type doivent d'abord être partiellement introduits dans un fourreau de contention radiale, comme décrit dans les documents de brevets FR 2 870 316 et FR 2007/03767. Le document GB-A-2244780 divulgue un outil conformé en entonnoir.

Or, cette opération doit être réalisée avec rigueur et précision de manière à éviter tout endommagement du dispositif de contrôle d'écoulement lors de son introduction, dans le fourreau.

Dans ce contexte, l'invention a pour but de proposer un outillage permettant de réaliser cette opération de façon simple, sûre, et reproductible.

A cette fin, l'outillage de l'invention, par ailleurs conforme à la définition générique qu'en donne le préambule de la description ci-dessus, comprend au moins trois outils, le premier outil comprenant une douille et une poussoir d'éjection, la douille étant dimensionnée pour recevoir le dispositif de contrôle d'écoulement introduit par son extrémité amont et pour loger, à l'exception du joint à coupelle, ce dispositif de contrôle d'écoulement en position repliée des pattes, le poussoir étant monté coulissant par rapport à la douille pour permettre d'éjecter au moins partiellement le dispositif hors de la douille, le troisième outil comprenant un cylindre et un piston de centrage coulissant dans le cylindre, ce piston de centrage étant sollicité élastiquement par un ressort précontraint vers une position de repos dans laquelle il dépasse partiellement du cylindre, et étant dimensionné pour constituer, en position de repos, un guide interne au fourreau introduit dans le cylindre jusqu'à une butée interne de ce cylindre, le deuxième outil étant conformé en entonnoir et comprend deux demi-coquilles symétriques l'une de l'autre, ce deuxième outil présentant une cheminée d'entrée propre à recevoir au moins partiellement la douille, une cheminée de sortie dimensionnée pour recevoir au moins partiellement le fourreau et pour être partiellement introduite dans le cylindre, et une zone de rétrécissement radial, reliant la cheminée d'entrée à la cheminée de sortie et présentant, du côté de la cheminée de sortie, une section au plus égale à la section interne du fourreau.

Pour rendre son utilisation plus facile encore, il est possible de prévoir que l'outillage de l'invention comprenne en outre un levier, au moins un support fourchu, et un châssis auquel le levier et le support fourchu sont liés, que le levier soit monté rotatif autour d'un axe distant du châssis et comprenne au moins un premier élément d'appui, que le support fourchu présente une fourche distante du châssis et s'étendant parallèlement à l'axe de rotation du levier, que la fourche soit dimensionnée pour servir d'appui à la douille du premier outil en laissant libre le poussoir, et que le premier élément d'appui du levier soit disposé au-dessus de la fourche.

Il peut aussi être judicieux de prévoir que le levier comprenne un deuxième élément d'appui espacé du premier élément d'appui à la fois le long du levier et suivant une direction perpendiculaire au levier et à son axe de rotation, le deuxième élément d'appui étant ainsi plus éloigné du châssis que le premier élément d'appui, et de prévoir que le troisième outil soit lié au châssis par son cylindre, et que le deuxième élément d'appui du levier soit disposé au-dessus du piston de centrage du troisième outil.

Le châssis peut par exemple comprendre une paroi d'une mallette contenant au moins les trois outils.

L'invention concerne également, selon un deuxième aspect, un procédé de mise en oeuvre de l'outillage tel que précédemment décrit pour introduire dans le fourreau le dispositif de contrôle d'écoulement destiné à être ultérieurement inséré dans une canalisation de fluide, ce procédé étant caractérisé en ce qu'il comprend les opérations consistant à : introduire par son extrémité amont le dispositif dans la douille du premier outil en appliquant une force de rapprochement entre la douille et l'extrémité aval du dispositif, le poussoir de ce premier outil étant ainsi repoussé hors de la douille; placer le fourreau sur le piston de centrage du troisième outil, ce piston étant placé dans sa position de repos; insérer la cheminée de sortie du deuxième outil dans le cylindre du troisième outil; insérer, dans la cheminée d'entrée du deuxième outil, la douille du premier outil en la présentant du côté du joint à coupelle dépassant de cette douille, ce qui a au moins pour effet de comprimer radialement le joint à coupelle dans la zone de rétrécissement du deuxième outil; et rentrer progressivement le poussoir du premier outil dans la douille, ce qui a au moins pour effet d'éjecter partiellement le dispositif hors de la douille en comprimant radialement les pattes élastiques dans la zone de rétrécissement du deuxième outil, de rentrer intégralement le joint dans le fourreau et d'y introduire les pattes tout en repoussant, par l'extrémité aval du dispositif, le piston de centrage dans le cylindre à l'encontre de la force de rappel du ressort précontraint.

Dans le cas où l'outillage comprend un levier doté d'un premier élément d'appui, le procédé de l'invention comprend de préférence une opération supplémentaire mise en oeuvre avant l'introduction du dispositif dans la douille du premier outil et consistant à placer cette douille sur la fourche en laissant le poussoir dépasser sous la fourche, la force de rapprochement pouvant ainsi être exercée en rapprochant le levier du châssis alors que le premier élément d'appui est appliqué sur l'extrémité aval du dispositif de contrôle d'écoulement.

Dans le cas où l'outillage comprend un levier doté d'un deuxième élément d'appui, l'opération consistant à rentrer progressivement le poussoir du premier outil dans la douille peut être aisément effectuée en rapprochant le levier du châssis alors que le deuxième élément d'appui est appliqué sur le poussoir du premier outil.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un dispositif de contrôle d'écoulement concerné par l'outillsage de l'invention;
- les figures 2 et 3 sont des vues en coupe axiale représentant l'insertion partielle d'un dispositif de contrôle d'écoulement tel qu'illustré à la figure 1 dans la douille du premier outil appartenant à l'outillage de l'invention;
- les figures 4 et 5 sont des vues en coupe axiales partielles des trois outils appartenant à l'outillage de l'invention, représentés à des instants successifs de la phase d'insertion d'un dispositif de contrôle d'écoulement tel qu'illustré à la figure 1 dans un fourreau;
- la figure 6 est une vue en coupe axiale des trois outils appartenant à l'outillage de l'invention, représentés à la fin de la phase d'insertion d'un dispositif de contrôle d'écoulement tel qu'illustré à la figure 1 dans un fourreau;
- la figure 7 est une vue en coupe axiale du troisième outil représenté postérieurement à la phase d'insertion d'un dispositif de contrôle d'écoulement tel qu'illustré à la figure 1 dans un fourreau;
- la figure 8 est une vue en perspective représentant un outillage conforme à un mode de réalisation préféré de l'invention, représenté dans une configuration correspondant à l'étape illustrée à la figure 3; et
- la figure 9 est une vue en perspective représentant un outillage conforme au mode de réalisation préféré de l'invention, représenté dans une configuration correspondant à l'étape illustrée à la figure 6.

Comme indiqué précédemment, l'invention concerne essentiellement un outillage permettant d'introduire un dispositif de contrôle d'écoulement 1 dans un fourreau 2, cette opération préparant l'insertion ultérieure de ce dispositif, une fois chemisé par le fourreau 2, dans une canalisation de fluide, et en particulier dans une canalisation de gaz.

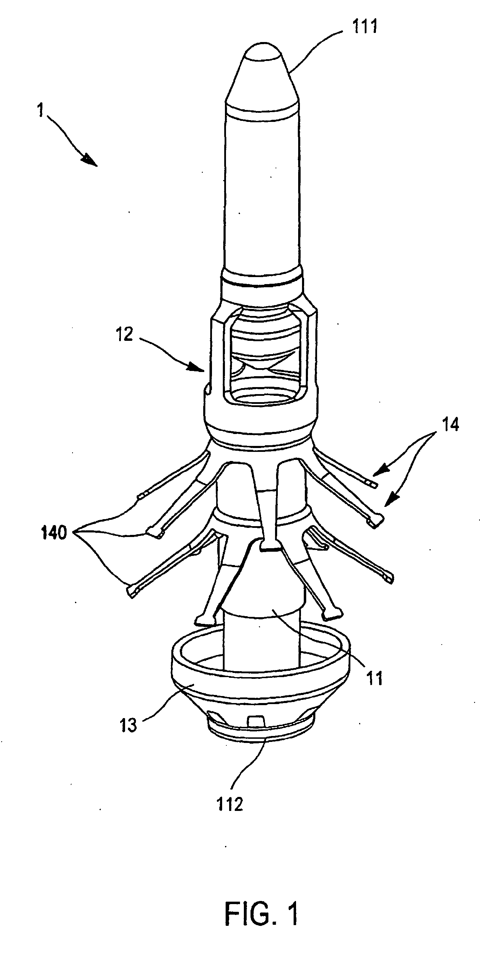

Le dispositif de contrôle d'écoulement concerné a été décrit dans la demande de brevet FR 2007/03767, et se trouve illustré à la figure 1.

Un tel dispositif 1 comprend typiquement un corps creux 11, une vanne 12, un joint d'étanchéité à coupelle 13, et une pluralité de pattes élastiques 14.

Le corps creux 11 présente une extrémité amont 111 formant un nez d'introduction, et une extrémité aval 112 portant le joint d'étanchéité à coupelle 13.

La vanne 12, qui est installée dans le corps creux 11, est conçue pour se fermer et corrélativement pour obturer le corps creux lorsque le débit de fluide dans la canalisation excède une valeur limite prédéterminée.

Le joint d'étanchéité à coupelle 13, qui entoure le corps creux 11 et qui s'applique sur la paroi interne de la canalisation, force le fluide circulant dans la canalisation à traverser le corps creux 11, la circulation de fluide étant ainsi bloquée lorsque la vanne 12 obture le corps creux 11.

Les pattes élastiques 14, qui sont liées au corps creux 11 entre les extrémités amont 111 et aval 112 de ce corps creux 11, sont conçues pour s'épanouir élastiquement, par leurs extrémités libres 140 tournées vers l'extrémité aval 112 du corps creux 11, une fois le dispositif 1 installé dans la canalisation, et donc pour mainterir ce dispositif en place dans la canalisation.

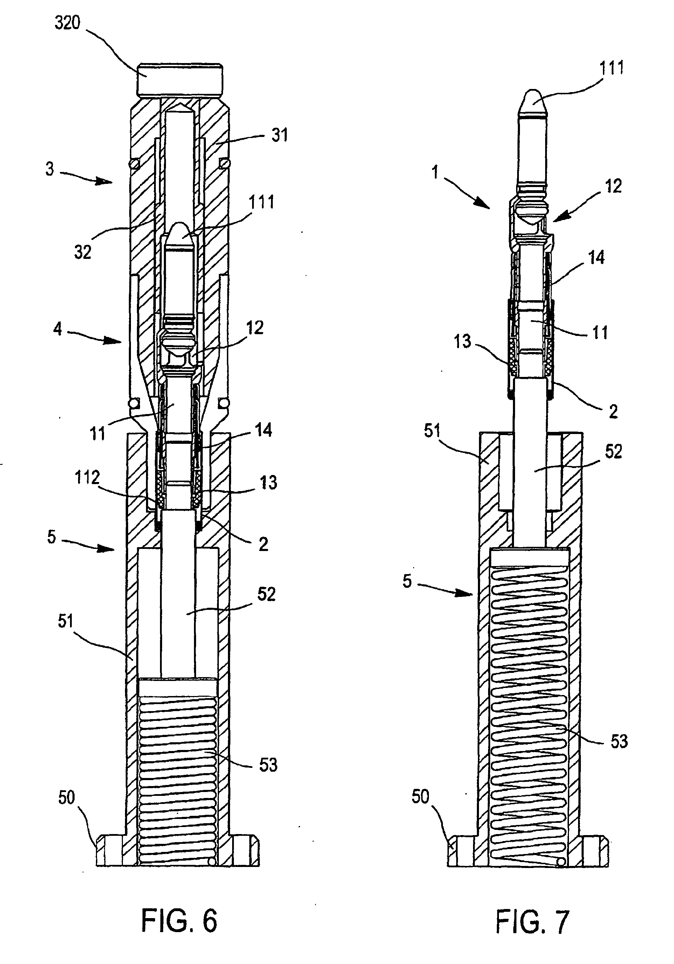

Néanmoins, pour pouvoir être inséré dans une canalisation, un tel dispositif 1 doit d'abord être partiellement introduit dans un fourreau 2, le joint 13 et les pattes 14 étant alors repliés radialement et contraints élastiquement dans ce fourreau 2 (figure 7).

A cette fin, l'outillage de l'invention comprend au moins trois outils 3, 4, et 5.

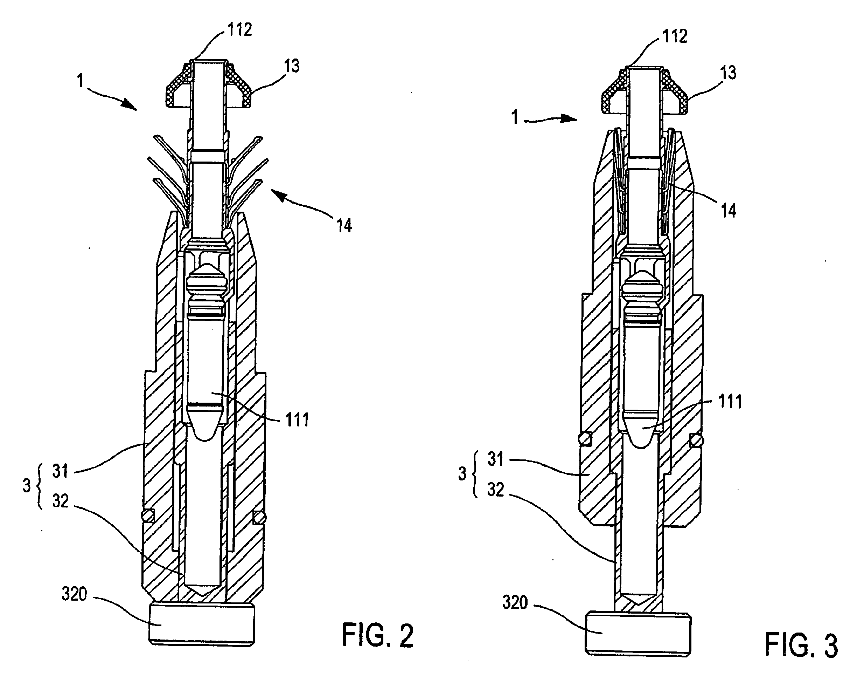

Le premier outil 3, notamment visible sur les figures 2 et 3, comprend une douille 31 et un poussoir d'éjection 32.

Comme le montrent ces figures, la douille 31 est dimensionnée pour recevoir le dispositif 1 lorsque ce dispositif y est introduit par son extrémité amont 111.

La douille 31 est par ailleurs dimensionnée pour loger ce dispositif 1, à l'exception de son joint à coupelle 13, dans une configuration dans laquelle les pattes élastiques 14 sont en position repliée vers le corps creux 11.

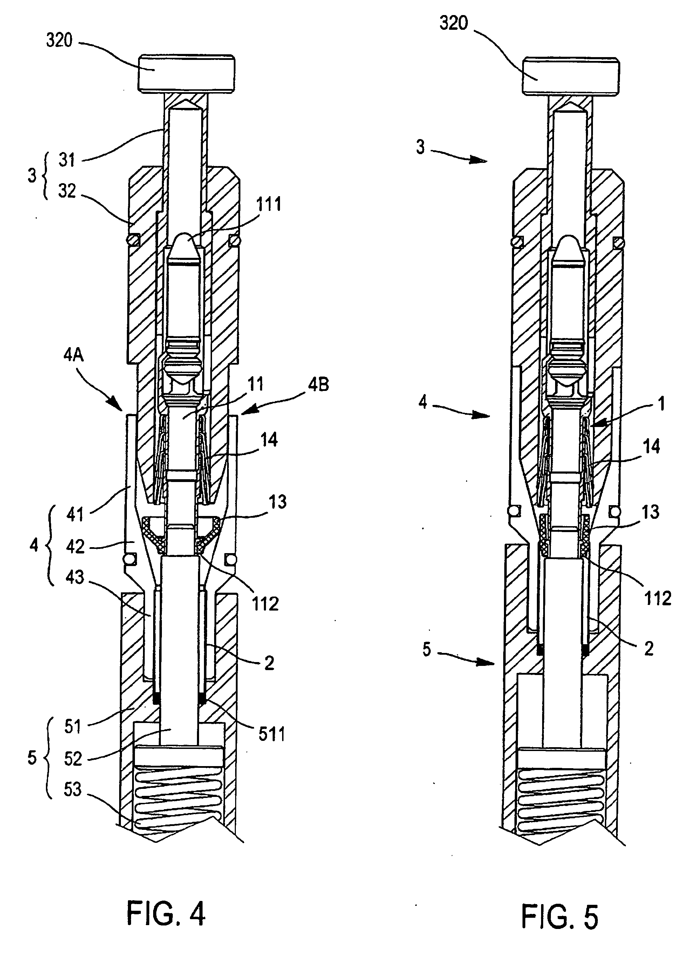

Le poussoir 32, qui est avantageusement muni d'une tête 320, est monté coulissant par rapport à la douille 31, ce qui lui permet d'éjecter au moins partiellement le dispositif 1 hors de la douille 31 comme décrit ultérieurement en référence aux figures 4 et 5.

Le deuxième outil 4 est conçu pour coopérer avec les deux autres outils et sera donc également décrit ultérieurement.

Le troisième outil 5, partiellement visible aux figures 4 et 5 et intégralement visible aux figures 6 et 7, comprend un cylindre 51, un piston de centrage 52, et un ressort précontraint 53.

Le piston de centrage 52 est monté coulissant dans le cylindre 51 et sollicité élastiquement par le ressort 53 vers une position de repos dans laquelle il dépasse partiellement du cylindre 51.

Comme le suggère notamment la figure 4, le piston de centrage 52 est par ailleurs dimensionné pour constituer, en position de repos, un guide interne au fourreau 2, ce fourreau pouvant être introduit dans le cylindre 51 jusqu'à une butée interne 511 prévue dans ce cylindre 51.

Le deuxième outil 4 est conformé en entonnoir et. est constitué de deux demi-coquilles 4A et 4B, symétriques l'une de l'autre.

Ce deuxième outil 4 présente une cheminée d'entrée 41, une cheminée de sortie 43, et une zone intermédiaire de rétrécissement radial 42.

La cheminée d'entrée 41 est dimensionnée pour recevoir la partie inférieure de la douille 31.

La cheminée de sortie 43 est dimensionnée pour recevoir au moins partiellement le fourreau 2, et pour être elle-même partiellement introduite dans le cylindre 51.

Et la zone de rétrécissement radial 42, qui relie la cheminée d'entrée 41 à la cheminée de sortie 43, présente, du côté de la cheminée de sortie 43, une section au plus égale à la section interne du fourreau 2.

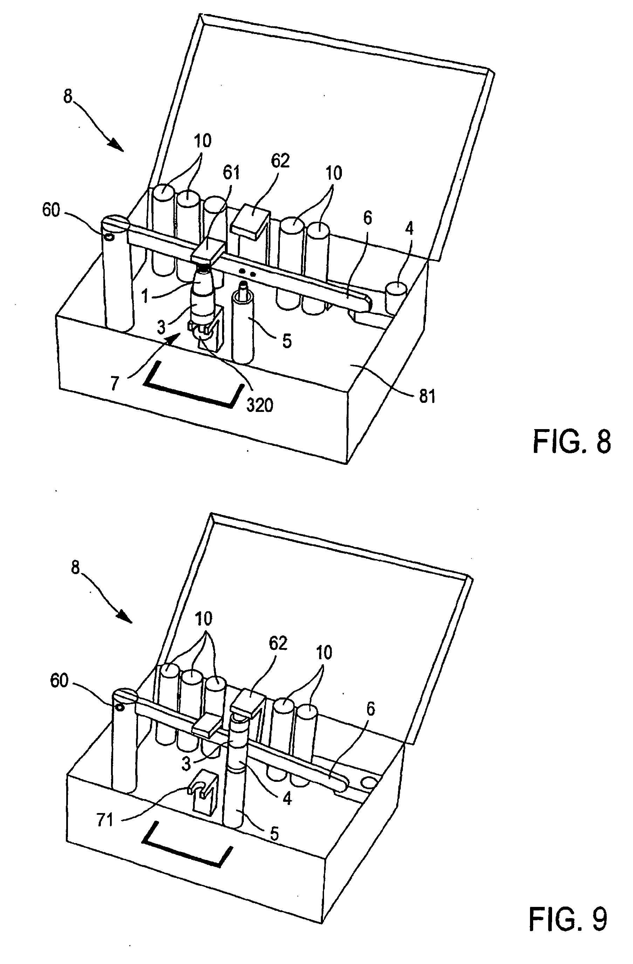

Comme le montrent les figures 8 et 9, l'outillage de l'invention comprend aussi de préférence un levier 6, un support fourchu 7, et un châssis 81.

En fait, le châssis 81, auquel le levier 6 et le support fourchu 7 sont liés, peut être constitué par une paroi d'une mallette 8 qui contient notamment les trois outils 3, 4, et 5, et éventuellement des étuis 10 renfermant chacun un dispositif 1.

Le levier 6 est monté rotatif autour d'un axe 60 distant du châssis 81 et comprend avantageusement deux éléments d'appui 61 et 62.

Le deuxième élément d'appui 62 est espacé du premier élément d'appui 61 à la fois le long du levier 6 et suivant une direction perpendiculaire au levier 6 et à son axe de rotation 60, ce deuxième élément d'appui 62 étant ainsi plus éloigné du châssis 81 que le premier élément d'appui 61.

Le support fourchu 7 présente une fourche 71 qui est distante du châssis 81 et qui s'étend parallèlement à l'axe 60 de rotation du levier 6.

La fourche 71 est dimensionnée pour servir d'appui à la douille 31 du premier outil 3 en laissant libre le poussoir 32, et notamment sa tête 320 (figure 8).

Comme le suggèrent les figures 8 et 9, le troisième outil 5 est de préférence lié au châssis 81, par exemple par son cylindre 51 ou plus précisément par l'embase 50 (figures 6 et 7) de ce cylindre.

Le premier élément d'appui 61 du levier 6 est disposé au-dessus de la fourche 71, tandis que le deuxième élément d'appui 62 du levier 6 est disposé au-dessus du piston de centrage 52 du troisième outil 5.

L'invention concerne également un procédé de mise en oeuvre de l'outillage précédemment décrit, ce procédé permettant d'introduire dans le fourreau 2 le dispositif 1 de contrôle d'écoulement destiné à être inséré dans une canalisation de fluide.

La première opération de ce procédé, illustrée aux figures 2 et 3, consiste à introduire, par son extrémité amont 111, le dispositif 1 dans la douille 31 du premier outil 3 en appliquant une force de rapprochement entre cette douille 31 et l'extrémité aval 112 du dispositif 1, le poussoir 32 du premier outil 3 étant, soit de façon préalable, soit pendant cette opération, repoussé hors de la douille 31.

La deuxième opération de ce procédé, qui est suggérée aux figures 4 et 5 qui en illustrent le résultat, consiste à placer le fourreau 2 sur le piston de centrage 52 du troisième outil 5, ce piston 52 étant alors placé dans sa position de repos.

La troisième opération du procédé, également suggérée aux figures 4 et 5 et préalable à l'état illustré sur ces figures, consiste à insérer la cheminée de sortie 43 du deuxième outil 4 dans le cylindre 51 du troisième outil 5.

La quatrième opération du procédé, que les figures 4 et 5 illustrent de façon spécifique, consiste à insérer, dans la cheminée d'entrée 41 du deuxième outil 4, la douille 31 du premier outil 3 en la présentant du côté du joint à coupelle 13 qui dépasse de cette douille 31.

Cette opération a notamment pour effet de comprimer radialement le joint à coupelle 13 dans la zone de rétrécissement 42 du deuxième outil 4 et peut éventuellement commencer l'introduction du joint 13 dans le fourreau 2.

La cinquième opération du procédé, dont le résultat est visible sur la figure 6, consiste à rentrer progressivement le poussoir 32 du premier outil 3 dans la douille 31.

Cette opération a notamment pour effet d'éjecter partiellement le dispositif 1 hors de la douille 31 en comprimant radialement les pattes élastiques 14 dans la zone de rétrécissement 42 du deuxième outil 4, de rentrer intégralement le joint 13 dans le fourreau 2, et d'introduire également les pattes 14 dans ce fourreau 2.

En outre, pendant cette opération, l'extrémité aval 112 du dispositif 1 repousse le piston de centrage 52 dans le cylindre 51. à l'encontre de la force de rappel exercée par le ressort précontraint 53.

Dans le cas préféré où l'outillage de l'invention comprend notamment le levier 6 et le support fourchu 7 tels qu'illustrés aux figures 8 et 9, le procédé de l'invention comprend, avant la première opération, une opération préparatoire consistant à placer la douille 31 du premier outil 3 sur la fourche 71 du support 7 en laissant le poussoir 32, et notamment sa tête 320, dépasser sous la fourche 71.

La force de rapprochement qui doit être appliquée entre la douille 31 et l'extrémité aval 112 du dispositif 1 peut alors être exercée (figure 8) en rapprochant le levier 6 du châssis 81 pendant que le premier élément d'appui 61 est appliqué sur l'extrémité aval 112 de ce dispositif 1.

Par ailleurs, la cinquième opération, qui consiste à rentrer progressivement le poussoir 32 du premier outil 3 dans la douille 31 peut être effectuée (figure 9) en rapprochant le levier 6 du châssis 81 alors que le deuxième élément d'appui 62 est appliqué sur le poussoir 32 du premier outil 3.

## Revendications

1. Outillage d'introduction d'un dispositif de contrôle d'écoulement (1) dans un fourreau (2), en vue de l'insertion ultérieure de ce dispositif chemisé par le fourreau dans une canalisation de fluide, ce dispositif de contrôle d'écoulement (1) comprenant un corps creux (11) doté d'une extrémité amont (111) et d'une extrémité aval (112), une vanne (12) intégrée au corps creux (11) et conçue pour se fermer en réponse à un débit excessif de fluide dans la canalisation, un joint d'étanchéité à coupelle (13) disposé à l'extrémité aval (112) du corps creux (11), et une pluralité de pattes élastiques (14) liées au corps creux (11) entre les extrémités amont (111) et aval (112) de ce corps creux (11) et conçues pour s'épanouir élastiquement par leurs extrémités libres tournées vers l'extrémité aval (112) du corps creux (11), une fois le dispositif (1) installé dans la canalisation, le joint (13) et les pattes (14) étant repliés radialement et contraints élastiquement dans le fourreau (2) après introduction de ce dispositif (1) dans ce fourreau (2), cet outillage comprenant au moins trois outils (3, 4, 5), le premier outil (3) comprenant une douille (31) et un poussoir d'éjection (32), la douille (31) étant dimensionnée pour recevoir le dispositif de contrôle d'écoulement (1) introduit par son extrémité amont (111) et pour loger, à l'exception du joint à coupelle (13), ce dispositif de contrôle d'écoulement en position repliée des pattes (14), le poussoir (32) étant monté coulissant par rapport à la douille (31) pour permettre d'éjecter au moins partiellement le dispositif (1) hors de la douille (31), le troisième outil (5) comprenant un cylindre (51) et un piston de centrage (52) coulissant dans le cylindre (51), ce piston de centrage (52) étant sollicité élastiquement par un ressort précontraint (53) vers une position de repos dans laquelle il dépasse partiellement du cylindre (51), et étant dimensionné pour constituer, en position de repos, un guide interne au fourreau (2) introduit dans le cylindre (51) jusqu'à une butée interne (511) de ce cylindre (51), le deuxième outil (4) étant conformé en entonnoir et comprend deux demi-coquilles (4A, 4B) symétriques l'une de l'autre, ce deuxième outil (4) présentant une cheminée d'entrée (41) propre à recevoir au moins partiellement la douille (31), une cheminée de sortie (43) dimensionnée pour recevoir au moins partiellement le fourreau (2) et pour être partiellement introduite dans le cylindre (51), et une zone de rétrécissement radial (42), reliant la cheminée d'entrée (41) à la cheminée de sortie (43) et présentant, du côté de la cheminée de sortie (43), une section au plus égale à la section interne du fourreau (2).

2. Outillage suivant la revendication 1, **caractérisé en ce qu'**il comprend en outre un levier (6), au moins un support fourchu (7), et un châssis (81) auquel le levier (6) et le support fourchu (7) sont liés, **en ce que** le levier (6) est monté rotatif autour d'un axe (60) distant du châssis (81) et comprend au moins un premier élément d'appui (61), **en ce que** le support fourchu (7) présente une fourche (71) distante du châssis (81) et s'étendant parallèlement à l'axe (60) de rotation du levier (6), **en ce que** la fourche (71) est dimensionnée pour servir d'appui à la douille (31) du premier outil (3) en laissant libre le poussoir (32), et **en ce que** le premier élément d'appui (61) du levier (6) est disposé au-dessus de la fourche (71).

3. Outillage suivant la revendication 2, **caractérisé en ce que** le levier (6) comprend un deuxième élément d'appui (62) espacé du premier élément d'appui (61) à la fois le long du levier (6) et suivant une direction perpendiculaire au levier (6) et à son axe de rotation (60), le deuxième élément d'appui (62) étant ainsi plus éloigné du châssis (81) que le premier élément d'appui (61), **en ce que** le troisième outil (5) est lié au châssis (81) par son cylindre (51), et **en ce que** le deuxième élément d'appui (62) du levier (6) est disposé au-dessus du piston de centrage (52) du troisième outil (5).

4. Outillage suivant l'une quelconque des revendications 2 et 3, **caractérisé en ce que** le châssis (81) comprend une paroi d'une mallette (8) contenant au moins les trois outils (3, 4, 5).

5. Procédé de mise en oeuvre de l'outillage suivant l'une quelconque des revendications précédentes pour introduire dans le fourreau (2) le dispositif (1) de contrôle d'écoulement destiné à être inséré dans une canalisation de fluide, **caractérisé en ce qu'**il comprend les opérations consistant à : introduire par son extrémité amont (111) le dispositif (1) dans la douille (31) du premier outil (3) en appliquant une force de rapprochement entre la douille (31) et l'extrémité aval (112) du dispositif (1), le poussoir (32) de ce premier outil (3) étant ainsi repoussé hors de la douille (31); placer le fourreau (2) sur le piston de centrage (52) du troisième outil (5), ce piston (52) étant placé dans sa position de repos; insérer la cheminée de sortie (43) du deuxième outil (4) dans le cylindre (51) du troisième outil (5); insérer, dans la cheminée d'entrée (41) du deuxième outil (4), la douille (31) du premier outil (3) en la présentant du côté du joint à coupelle (13) dépassant de cette douille (31), ce qui a au moins pour effet de comprimer radialement le joint à coupelle (13) dans la zone de rétrécissement (42) du deuxième outil (4); et rentrer progressivement le poussoir (32) du premier outil (3) dans la douille (31), ce qui a au moins pour effet d'éjecter partiellement le dispositif (1) hors de la douille (31) en comprimant radialement les pattes élastiques (14) dans la zone de rétrécissement (42) du deuxième outil (4), de rentrer intégralement le joint (13) dans le fourreau (2) et d'y introduire les pattes (14) tout en repoussant, par l'extrémité aval (112) du dispositif (1), le piston de centrage (52) dans le cylindre (51) à l'encontre de la force de rappel du ressort précontraint (53).

6. Procédé suivant la revendication 5, pour la mise en oeuvre de l'outillage suivant la revendication 2, **caractérisé en ce qu'**il comprend l'opération supplémentaire mise en oeuvre avant l'introduction du dispositif (1) dans la douille (31) du premier outil (3) et consistant à placer cette douille (31) sur la fourche (71) en laissant le poussoir (32) dépasser sous la fourche (71), et **en ce que** la force de rapprochement est exercée en rapprochant le levier (6) du châssis (81) alors que le premier élément d'appui (61) est appliqué sur l'extrémité aval (112) du dispositif (1) de contrôle d'écoulement.

7. Procédé suivant l'une quelconque des revendications 5 et 6, pour la mise en oeuvre de l'outillage suivant la revendication 3, **caractérisé en ce que** l'opération consistant à rentrer progressivement le poussoir (32) du premier outil (3) dans la douille (31) est effectuée en rapprochant le levier (6) du châssis (81) alors que le deuxième élément d'appui (62) est appliqué sur le poussoir (32) du premier outil (3).

## Claims

1. A tool set for the introduction of a flow-monitoring device (1) in a sheath (2), in view of a later insertion of this device, jacketed by the sheath, in a fluid piping, this flow-monitoring device (1) comprising a hollow body (11) provided with an upstream end (111) and a downstream end (112), a valve (12) integrated to the hollow body (11) and designed to close in response to an excessive fluid flow rate through the piping, a cup-type seal member (13) arranged at the downstream end (112) of hollow body (11), and a plurality of elastic legs (14) connected to the hollow body (11) between the upstream (111) and downstream (112) ends of this hollow body (11) and designed to distend elastically by their free ends turned towards the downstream end (112) of hollow body (11), once the device (1) set in the piping, the seal (13) and legs (14) being radially folded and elastically stressed in the sheath (2) after introducing this device (1) into the sheath (2), this tool set comprising at least three tools (3, 4, 5), the first tool (3) comprising a bushing (31) and an ejecting pusher (32), the bushing (31) being dimensioned to receive the flow-monitoring device (1) introduced from its upstream end (111) and to house, with the exception of the cup-type seal (13), this flow-monitoring device in a position where said legs (14) are folded, the pusher (32) being slidingly mounted with respect to the bushing (31) to make it possible to eject at least partially the device (1) out of the bushing (31), the third tool (5) comprising a cylinder (51) and a centering piston (52) sliding in said cylinder (51), this centering piston (52) being elastically biased by a prestressed spring (53) towards an idle position in which said centering piston partially extends out of cylinder (51), and being dimensioned to constitute, in idle position, an inner guide for the sheath (2) introduced in the cylinder (51) to an inner stopper (511) of this cylinder (51), the second tool (4) being shaped like a funnel and comprising two symmetrical half-shells (4A, 4B), this second tool (4) exhibiting an inlet stack (41) adapted to receive at least partially the bushing (31), an outlet stack (43) dimensioned to receive at least partially the sheath (2) and to be partially introduced in the cylinder (51), and a radially tapering area (42), connecting the inlet stack (41) to the outlet stack (43) and exhibiting, on the side of the outlet stack (43), a section at most equal to the inner section of the sheath (2).

2. The tool set according to claim 1, **characterized in that** it further comprises a lever (6), at least one forked support member (7), and a chassis (81) to which the lever (6) and the forked support member (7) are connected, **in that** the lever (6) is rotatably mounted around an axis (60) spaced apart from the chassis (81) and comprises at least a first bearing member (61), **in that** the forked support member (7) exhibits a fork (71) spaced apart from said chassis (81) and extending parallely to the rotational axis (60) of lever (6), **in that** the fork (71) is dimensioned to serve as a bearing to the bushing (31) of the first tool (3) by leaving the pusher (32) free, and **in that** the first bearing member (61) of said lever (6) is arranged above the fork (71).

3. The tool set according to claim 2, **characterized in that** the lever (6) comprises a second bearing member (62) spaced apart from the first bearing member (61) both along the lever (6) and along a direction perpendicular to the lever (6) and to its rotational axis (60), the second bearing member (62) thus being further away from the chassis (81) than the first bearing member (61), **in that** the third tool (5) is connected to the chassis (81) by its cylinder (51), and **in that** the second bearing member (62) of said lever (6) is arranged above the centering piston (52) of the third tool (5).

4. The tool set according to any one of claims 2 and 3, **characterized in that** the chassis (81) comprises a wall of a mallet (8) containing at least the three tools (3, 4, 5).

5. A method of implementing the tool set according to any one of the preceding claims to introduce into the sheath (2) the flow-monitoring device (1) intended to be inserted in a fluid piping, **characterized in that** it comprises the steps of: introducing, by its upstream end (111), the device (1) into the bushing (31) of said first tool (3) by applying a joining force bringing together the bushing (31) and the downstream end (112) of device (1), whereby the pusher (32) of this first tool (3) is pushed out of the bushing (31); placing the sheath (2) on the centering piston (52) of the third tool (5), said piston (52) being placed in its idle position; inserting the outlet stack (43) of the second tool (4) in the cylinder (51) of the third tool (5); inserting, in the inlet stack (41) of the second tool (4), the bushing (31) of the first tool (3) by bringing it on the cup-type seal (13) side extending out of this bushing (31), which has at least the effect of radially compressing the cup-type seal (13) in the tapering area (42) of the second tool (4); and gradually inserting the pusher (32) of the first tool (3) into the bushing (31), which has at least the effect of partially ejecting the device (1) out of the bushing (31) by radially compressing the elastic legs (14) in the tapering area (42) of the second tool (4), to integrally insert the seal (13) into the sheath (2) and to introduce therein the legs (14) while pushing back, from the downstream end (112) of device (1), the centering piston (52) in the cylinder (51) against the return force of the prestressed spring (53).

6. The method according to claim 5, for the implementation of the tool set according to claim 2, **characterized in that** it comprises an additional step carried out before the introduction of the device (1) into the bushing (31) of the first tool (3) and of placing said bushing (31) on the fork (71) by leaving the pusher (32) extend under the fork (71), and **in that** the joining force is exerted by bringing together said lever (6) and said chassis (81) whereas the first bearing member (61) is applied on the downstream end (112) of the flow-monitoring device (1).

7. The method according to any of claims 5 and 6, for the implementation of the tool set according to claim 3, **characterized in that** the step of gradually inserting the pusher (32) of the first tool (3) into the bushing (31) is carried out by bringing said lever (6) closer to said chassis (81) whereas the second bearing member (62) is applied on the pusher (32) of the first tool (3).

## Patentansprüche

1. Arbeitsgerät zur Einführung einer Strömungs-Kontrolleinrichtung (1) in eine Hülse (2) zur späteren Einführung dieser mit der Hülse ummantelten Einrichtung in einen Fluidkanal, wobei die Strömungs-Kontrolleinrichtung (1) aufweist einen Hohlkörper (11), der mit einem stromaufwärts liegenden Ende (111) und einem stromabwärts liegenden Ende (112) versehen ist, ein in den Hohlkörper (11) integriertes und sich in Reaktion auf einen übermäßigen Fluiddurchsatz in den Kanal schließendes Ventil (12), eine napfförmige Dichtung (13), die an dem stromabwärts liegenden Ende (112) des Hohlkörpers (11) angeordnet ist, und eine Mehrzahl von elastischen Klauen (14), die mit dem Hohlkörper (11) zwischen den stromaufwärts liegenden (111) und stromabwärts liegenden (112) Enden des Hohlkörpers (11) angeordnet und zum elastischen Ausbauchen ihrer freien, zu dem stromabwärts liegenden Ende (112) des Hohlkörpers (11) hin gedrehten Enden vorgesehen sind, wenn die Einrichtung (1) in dem Kanal installiert ist, wobei die Dichtung (13) und die Klauen (14) nach Einführung der Einrichtung (1) in die Hülse (2) radial umgebogen und elastisch in der Hülse (2) eingezwängt werden, wobei dieses Arbeitsgerät wenigstens drei Werkzeuge (3, 4, 5) umfasst, wobei das erste Werkzeug (3) eine Tülle (31) und einen Auswurfstößel (32) umfasst, wobei die Tülle (31) so bemessen ist, dass diese die durch ihr stromaufwärts liegendes Ende (111) eingeführte Strömungs-Kontrolleinrichtung (1) aufnehmen kann und mit Ausnahme der Napfdichtung (13) diese Strömungs-Kontrolleinrichtung bei umgebogenen Klauen (14) aufnehmen kann, wobei der Stößel (32) in Bezug zu der Tülle (31) verschiebbar montiert ist, um ein wenigstens teilweises Ausstoßen der der Einrichtung (1) aus der Tülle (31) zu ermöglichen, wobei das dritte Werkzeug (5) einen Zylinder (51) und in dem Zylinder (51) verschiebbaren Zentrierkolben (52) umfasst, wobei dieser Zentrierkolben (52) durch eine vorgespannte Feder (53) in eine Ruheposition elastisch vorgespannt ist, in welcher dieser teilweise aus dem Zylinder (51) hervorsteht, und so bemessen ist, dass dieser in der Ruheposition eine innere Führung für die in den Zylinder (51) eingeführte Hülse (2) bis zu einer Innenschulter 511) dieses Zylinders (51) bildet, wobei das zweite Werkzeug (4) trichterförmig ausgebildet ist und zwei zueinander symmetrische Halbschalen (4A, 4B) umfasst, wobei dieses zweite Werkzeug (4) aufweist einen Eingangskanal (41), der wenigstens teilweise die Tülle (31) aufnehmen kann, einen Ausgangskanal (43), der so bemessen ist, dass dieser wenigstens teilweise die Hülse (2) aufnehmen kann und teilweise in den Zylinder (51) eingeführt werden kann, und eine radiale Verengungszone (42), welche den Eingangskanal (41) mit dem Ausgangskanal (43) verbindet und auf der Seite des Ausgangskanals (43) einen Querschnitt aufweist, der höchstens mit dem Innenquerschnitt der Hülse (2) gleich ist.

2. Arbeitsgerät nach Anspruch 1, **dadurch gekennzeichnet, dass** dieses ferner umfasst einen Hebel (6), wenigstens einen gabelförmigen Halter (7) und einen Unterbau (81), mit welchem der Hebel (6) und der gabelförmige Halter (7) verbunden sind, dass der Hebel (6) drehbar um eine von dem Unterbau (31) entfernte Achse (60) angebracht ist und wenigstens ein erstes Anschlagelement (61) umfasst, dass der gabelförmige Halter (7) eine von dem Unterbau entfernte und sich parallel zur Drehachse (60) des Hebels (6) erstreckende Gabel (71) aufweist, dass die Gabel (71) so bemessen ist, dass diese als Anschlag der Tülle (31) des ersten Werkzeugs (3) unter Freihaltung des Stößels (32) dienen kann, und dass das erste Anschlagelement (61) des Hebels (6) oberhalb der Gabel (71) angeordnet ist.

3. Arbeitsgerät nach Anspruch 2, **dadurch gekennzeichnet, dass** der Hebel (6) ein zweites Anschlagelement (62) umfasst, das vom ersten Anschlagelement (61) sowohl entlang des Hebels (6) als auch in einer Richtung senkrecht zum Hebel (6) und dessen Drehachse (60) in Abstand liegt, wobei das zweite Anschlagelement (62) somit weiter entfernt vom Unterbau (81) als das erste Anschlagelement (61) ist, dass das dritte Werkzeug (5) mit dem Unterbau (81) durch dessen Zylinder (51) verbunden ist, und dass das zweite Anschlagelement (62) des Hebels (6) oberhalb des Zentrierkolbens (52) des dritten Werkzeugs (5) angeordnet ist.

4. Arbeitsgerät nach einem der Ansprüche 2 und 3, **dadurch gekennzeichnet, dass** der Unterbau (81) eine Wand eines kleinen Koffers (8) ist, der wenigstens die drei Werkzeuge (3, 4, 5) enthält.

5. Verfahren zur Anwendung des Arbeitsgeräts nach einem der vorhergehenden Ansprüche zum Einführen der zum Einsetzen in einen Fluidkanal bestimmten Strömungs-Kontrolleinrichtung (1) in die Hülse (2), **dadurch gekennzeichnet, dass** dieses umfasst, die Schritte bestehend aus: Einführen der Einrichtung (1) mit ihrem stromaufwärts liegenden Ende (111) in die Tülle (31) des ersten Werkzeugs (3) unter Aufbringen einer Stoßkraft zwischen der Tülle (31) und dem stromabwärts liegenden Ende (112) der Einrichtung (1), wobei der Stößel (32) des ersten Werkzeugs (3) dann aus der Tülle (31) zurückgedrückt wird; Platzieren der Hülse (2) auf dem Zentrierkolben (52) des dritten Werkzeugs (5), wobei dieser Kolben (52) in seiner Ruheposition angeordnet wird; Einführen des Ausgangskanals (43) des zweiten Werkzeugs (4) in den Zylinder (51) des dritten Werkzeugs (5); Einführen der Tülle (31) des ersten Werkzeugs (3) in den Eingangskanal (41) des zweiten Werkzeugs (4), indem dieser in der Nähe der von dieser Tülle (31) vorstehenden Napfdichtung (13) bereitgestellt wird, was wenigstens die Wirkung hat, dass die Napfdichtung (13) in der Einengungszone (42) des zweiten Werkzeugs (4) radial komprimiert wird; und fortschreitendes Zurückziehen des Stößels (32) von dem ersten Werkzeug (3) in die Tülle (31), was wenigstens den Zweck hat, die Einrichtung (1) teilweise aus der Tülle (31) herauszudrücken, indem die elastischen Klauen (14) in der Einengungszone (42) des zweiten Werkzeugs (4) radial komprimiert werden, vollständiges Zurückziehen der Dichtung (13) in die Hülse (2) und darin Einführen der Klauen (14) unter Zurückdrücken des Zentrierkolbens (52) in den Zylinder (51) gegen die Rückholkraft der vorgespannten Feder (53) über das stromabwärts liegende Ende (112) der Einrichtung (1).

6. Verfahren nach Anspruch 5, zur Anwendung des Arbeitsgeräts nach Anspruch 2, **dadurch gekennzeichnet**, einen zusätzlichen Anwendungsschritt vor Einführung der Einrichtung (1) in die Tülle (31) des ersten Werkzeugs (3) umfasst, der darin besteht, diese Tülle (31) auf der Gabel (71) zu platzieren, indem der Stößel (32) unter der Gabel (71) vorstehen gelassen wird, und dass die Stoßkraft und das Stoßen des Hebels (6) vom Unterbau (81) ausgeübt wird, so dass das erste Anschlagelement (61) auf das stromabwärts liegende Ende (112) der Strömungs-Kontrolleinrichtung (1) aufgedrückt wird.

7. Verfahren nach einem der Ansprüche 5 und 6, zur Anwendung des Arbeitsgeräts nach Anspruch 3, **dadurch gekennzeichnet, dass** der Schritt bestehend aus fortschreitendem Zurückziehen des Stößels (32) des ersten Werkzeugs (3) in die Tülle (31) unter Stoßen des Hebels (6) vom Unterbau (81) bewirkt wird, so dass das zweite Anschlagelement (62) auf den Stößel (32) des ersten Werkzeugs (3) aufgedrückt wird.
